# EUROPÄISCHE PATENTSCHRIFT

(11) **EP 1 499 489 B1**
(45) Veröffentlichungstag und Bekanntmachung des Hinweises auf die Patenterteilung: **02.08.2006**
(21) Anmeldenummer: 03714595.0
(22) Anmeldetag: 24.04.2003
(51) Int. Cl.: B29C 47/68, B29C 47/72

(54) **FILTRIER- BZW. ABLASSVORRICHTUNG, VERFAHREN ZUM FILTRIEREN BZW ABLASSEN UND VERWENDUNG DER VORRICHTUNG**
FILTRATION AND/OR DRAINAGE DEVICE, METHOD FOR FILTRATING AND/OR DRAINING AND USE OF THE DEVICE
DISPOSITIF DE FILTRAGE ET/OU D'EVACUATION, PROCÉDÉ DE FILTRAGE ET/OU D'EVACUATION ET USAGE DU DISPOSITIF

(30) Priorität: 26.04.2002 WO PCT/CH02/00233
(43) Veröffentlichungstag der Anmeldung: 26.01.2005
(73) Patentinhaber: Maag Pump Systems Textron AG, 8154 Oberglatt (CH)
(72) Erfinder: EMHARDT, Peter, 34134 Kassel (DE); BRINKEN, Frank, CH-6343 Rotkreuz (CH)
(74) Vertreter: Troesch Scheidegger Werner AG
(86) Internationale Anmeldenummer: PCT/CH2003/000267
(87) Internationale Veröffentlichungsnummer: WO 2003/090999

(56) Entgegenhaltungen:
- EP-A- 0 287 048
- DE-B- 2 153 962
- DE-C- 4 236 348
- US-A- 5 090 887
- US-A- 5 407 586
- US-A- 5 516 426
- US-B1- 6 325 922

## Beschreibung

Die vorliegende Erfindung betrifft eine Vorrichtung zum Filtrieren und/oder Ablassen von viskosen und hochviskosen Polymerschmelzen gemäss dem Oberbegriff nach Anspruch 1, sowie ein Verfahren zum Filtrieren und/oder Ablassen von von viskosen und hochviskosen Polymerschmelzen.

Zur Reinigung von verschmutzten Kunststoffschmelzen werden in der Kunststoffverarbeitung schon seit Jahren Schmelzefilter eingesetzt. Bei stark verschmutzten Schmelzen werden mehr oder weniger automatisierte Siebwechselvorrichtungen eingesetzt wie z.B. Bandsiebwechsler, Scheibensiebwechsler oder auch Flachschieber und Bolzensiebwechsler. Flachschieber sind beispielsweise beschrieben in US 3 788 484, US 3 962 092, US 4 880 374, EP 114 651, EP 925 904 sowie DE 19 612 790. In der US 2 060 423 wird ein Schieber mit Hydraulikantrieb offenbart, währenddem in der japanischen Offenlegung JP 2001 03872 ein Scheibensiebwechsler beschrieben wird. In der US 6 325 922, der EP 0 287 048 und der US 5 516 426 werden sog. Filterräder oder rotierbare Filterscheiben beschrieben, welche Kavitäten mit entsprechenden Siebelementen enthalten und welche um eine zentrale Achse zwischen zwei Gehäuseplatten rotierbar angeordnet sind. Ein Teil der beschriebenen Vorrichtungen sind automatisiert und benötigen somit eine Antriebs- und Steuereinheit.

In vielen Fällen genügt es jedoch, einen einfachen Siebwechsler in die Extrusionslinie einzubauen, welche bei Bedarf manuell betätigt wird. Insbesondere bei nicht sehr stark verschmutzten Schmelzen kann dann auf eine Antriebs- und Steuerungseinheit verzichtet werden. Einzig eine Drucküberwachung zur Detektion einer Siebverschmutzung ist notwendig.

Solche manuell betätigten Siebwechselvorrichtungen werden üblicherweise als Schwenkplattensiebwechsler ausgeführt, wie beispielsweise aus der DE 4 236 348 bekannt, bei denen eine flache Platte mit einer, zwei oder mehreren Siebstellen mittels eines Hebels von Hand bewegt wird. Das verschmutzte Sieb wird dabei aus dem Schmelzestrom raus gefahren und kann entnommen, gereinigt und durch eine neues ersetzt werden, während gleichzeitig ein sauberes, neues Sieb in den Schmelzekanal einfährt.

Üblicherweise muss für den Wechselvorgang die Extrusionsanlage angehalten oder bei zwei Sieben zumindest der Durchsatz deutlich reduziert werden, damit der Druck von dem Sieb nicht unzulässig ansteigt.

Gerade bei den manuellen Siebwechselvorrichtungen kommt es vor, dass die Siebe nur sehr selten, d.h. jede Woche einmal oder gar nur einmal pro Monat gewechselt werden müssen. In der Zwischenzeit kommt es aber oft zu einem "Verbacken" der Schmelze zwischen Gehäuse und Siebplatte, so dass ein erhöhtes Loslösemoment zum Losbrechen der Platte notwendig ist, als dies bei einer frisch eingeführten Schwenkplatte mit neuer Siebscheibe der Fall wäre. Damit genügend Moment aufgebracht werden kann, benutzt der Anlagenbediener daher oft eine Verlängerung (Rohr), die er über den Hebel der Handsiebwechselvorrichtung schiebt. Übliche Baugrössen solcher Schwenksiebwechsler erreichen Übersetzungsgrade der manuell durch den Bediener eingesetzten Kraft inkl. Einsatz einer ca. 3 m langen Hebelverlängerung durch ein aufgesetztes Rohr von ca. i = 10 - 15. Aber auch die damit erzielbaren Momente reichen oft nicht aus, um die Platte zu lösen. Dann lässt sich ein Wechsel nur noch unter erheblichem zeitlichen und personellen Aufwand durch eine Demontage der Siebwechselvorrichtung bewerkstelligen.

Kennzeichnend für diese schon aus vielfältigem Einsatz bekannten Lösungen solcher Schwenkplattensiebwechsler ist, dass eine Vergrösserung des Schwenkmomentes nur über eine Verlängerung der Hebellänge wie einem aufgesteckten Rohr, beschränkt durch Handhabbarkeit und verfügbaren Platz in der Anlage oder konstruktiv durch Variation des Drehpunktes zu erreichen ist. Ebenfalls kennzeichnendes Merkmal aller dieser bekannten Lösungen ist, dass der Schwenkbereich des Hebels immer auch gleich dem Schwenkbereich der Schwenkplatte ist, d.h. keine Über- oder Untersetzung der Bewegung erfolgt.

Entsprechend besteht die Aufgabe der vorliegenden Erfindung darin, einen Schwenkplattensiebwechsler vorzuschlagen, welcher einfacher handhabbar ist, weniger Platz in Anspruch nimmt und trotzdem ein einwandfreies Betätigen ermöglicht, bzw. genereller im Vorschlagen einer Vorrichtung zum Filtrieren und/oder Ablassen von viskosen oder hochviskosen Polymerschmelzen aus einer Medien-führenden Einrichtung, wie beispielsweise einem Extruder, einem Kneter oder dgl.. Erfindungsgemäss wird die gestellte Aufgabe mittels einer Vorrichtung gemäss dem Wortlaut nach Anspruch 1 gelöst. Vorgeschlagen wird, dass die Vorrichtung zum Filtrieren und/oder Ablassen von viskosen und hochviskosen Polymerschmelzen mindestens ein plattenartiges Element mit mindestens einem Durchgang und/oder einer Bohrung aufweist, welches Element um einen Drehpunkt gelagert schwenkbar ist, derart, um den Durchgang bzw. die Bohrung in oder aus dem Schmelzstrom zu führen, wobei das plattenartige Element bzw. die Platte über ein Getriebe mit einem Antrieb verbunden ist. Gemäss einer bevorzugten Ausführungsvariante weist die um einen Drehpunkt gelagert schwenkbare Platte ein siebartiges Organ auf, welches Organ in oder aus dem Schmelzstrom führbar ist.

Anstelle des siebartigen Organs oder in Ergänzung dazu, ist es auch möglich, in der Platte eine weitgehendst gerade verlaufende Durchführung bzw. einen Durchgang vorzusehen, eine gekrümmte Bohrung, eine um einen Winkel von ca. 180° umgelenkt verlaufende Bohrung bzw. einen Durchgang, etc..

Weitere bevorzugte Ausführungsvarianten der erfindungsgemässen Vorrichtung sind in den abhängigen Ansprüchen charakterisiert.

Die hier vorliegende Erfindung stellt eine einfache, kostengünstige Vorrichtung zum Filtrieren und/oder Ablassen eines viskosen Mediums, wie insbesondere einer Polymerschmelze zur Verfügung, die die oben genannten Probleme löst, indem eine einfache, kostengünstige Kraftübersetzung von i = 20 bis hin zu i = 50-100 mittels eines einfachen Getriebes, beispielsweise bestehend aus zwei Zahnrädern, realisiert wird.

Anhand der beigefügten und nachfolgend beschriebenen Figuren soll die Erfindung näher erläutert werden. Dabei zeigen:
- Fig. 1a und 1b: schematisch eine Ausführungsvariante einer erfindungsgemässen Vorrichtung in Draufsicht von vorne und im Schnitt,
- Fig. 2: den getriebemässigen Antrieb aus Fig. 1a in Vergrösserung,
- Fig. 3a bis 3e: schematisch dargestellt das Betätigen der erfindungsgemässen Vorrichtung,
- Fig. 4a und 4b: eine weitere praxisbezogene Ausführungsvariante der erfindungsgemässen Vorrichtung in Draufsicht und im Schnitt,
- Fig. 5a und 5b: eine weitere Ausführungsvariante der erfindungsgemässen Vorrichtung in Draufsicht in zwei verschiedenen Betriebspositionen,
- Fig. 6a und 6b: analog 5 wiederum eine weitere Ausführungsvariante der erfindungsgemässen Vorrichtung,
- Fig. 7: eine weitere Ausführungsvariante einer erfindungsgemässen Vorrichtung in Draufsicht, aufweisend einen Durchgang, vorgesehen für ein Filtriersieb, eine verschliessende Stellung sowie einen Durchgang bzw. eine Bohrung für das Ablassen einer Polymerschmelze,
- Fig. 8a - 8c: vereinfacht, schematisch im Schnitt drei mögliche Arbeitspositionen der Vorrichtung aus Fig. 7,
- Fig. 9: schematisch vereinfacht im Schnitt eine weitere Ausführungsvariante der Vorrichtung,
- Fig. 10: wiederum schematisch vereinfacht im Schnitt eine weitere Ausführungsvariante einer erfindungsgemässen Vorrichtung,
- Fig. 11: erneut eine weitere Ausführungsvariante, schematisch vereinfacht im Schnitt einer erfindungsgemässen Vorrichtung,
- Fig. 12 und 13: erneut eine weitere Ausführungsvariante der Vorrichtung, aufweisend eine zusätzliche, nach aussen kommunizierende Bohrung,
- Fig. 14: schematisch im Schnitt eine Bohrung durch eine Schwenkplatte, aufweisend einen zusätzlichen Ablasskanal und eine auswechselbare Siebplatte, und
- Fig. 15: den Durchgang der Figur 14 mit einer auswechselbaren Siebanordnung versehen, verschliessend den zusätzlichen Ablasskanal.

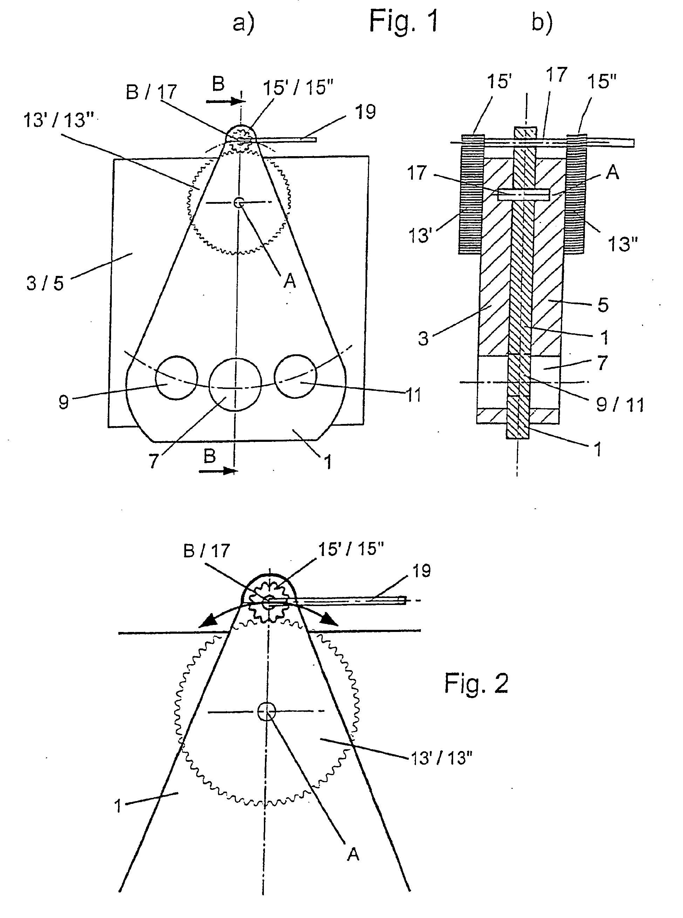

In den Fig. 1a und 1b ist ein erfindungsgemässer Schwenkplattensiebwechsler dargestellt, wobei die Fig. 1a den Siebwechsler schematisch in Front-Draufsicht darstellt, währenddem in Fig. 1b derselbe Wechsler im Schnitt dargestellt ist.

Der Schwenkplattensiebwechsler weist eine mittige Schwenkplatte 1 auf, welche um eine Achse A zwischen den beiden Gehäuseplatten 3 und 5 schwenkbar gelagert ist. In der Schwenkplatte 1 sind zwei Bohrungen bzw. Siebaufnahmekavitäten 9 und 11 angeordnet, vorgesehen für den Einsatz von Schmelzefiltern bzw. Filtersieben, um viskose bzw. hochviskose Medien zu filtrieren wie insbesondere Polymerschmelze.

In den beiden Gehäuseplatten 3 und 5 ist je eine Durchgangsbohrung 7 für das Hindurchtreiben der flüssigen Polymerschmelze vorgesehen. In der Darstellung gemäss Fig. 1a wäre somit der Durchtritt durch die Bohrung 7 verschlossen, indem keine der beiden Kavitäten 9 oder 11 mit den Filtersieben im Bereich der Durchgangsbohrung 7 angeordnet ist.

Um nun die Schwenkplatte 1 gegenüber den beiden Gehäuseplatten 3 und 5 um die Drehachse A zu schwenken, sind die in der Schwenkplatte 1 gelagerten Zahnräder 15' bzw. 15" mittels einer Kurbel 19 um die Achse B bzw. um die Welle 17 zu drehen, welche Zahnräder 15' bzw. 15" mit je einem Zahnrad 13' bzw. 13" in Eingriff stehen. Die beiden letzteren Zahnräder 13' und 13" sind fest je mit einer der Gehäuseplatten 3 bzw. 5 verbunden.

In Fig. 2 ist der Antrieb bzw. sind die Zahnräder aus Fig. 1a in Vergrösserung dargestellt. Dabei ist nun deutlich erkennbar, dass bei Betätigung der Kurbel 19 um die Welle 17 bzw. Drehachse B die beiden je seitlich von der Schwenkplatte 1 angeordneten Zahnräder 15' bzw. 15" in die eine oder andere Pfeilrichtung entlang der beiden Zahnräder 13' bzw. 13" bewegt werden. Dadurch wird aber auch die Schwenkplatte 1 um die Drehachse A bewegt, um eine der beiden Kavitäten 9 oder 11, enthaltend die Filtersiebe, so in den Bereich der Durchgangsbohrung 7 zu bewegen.

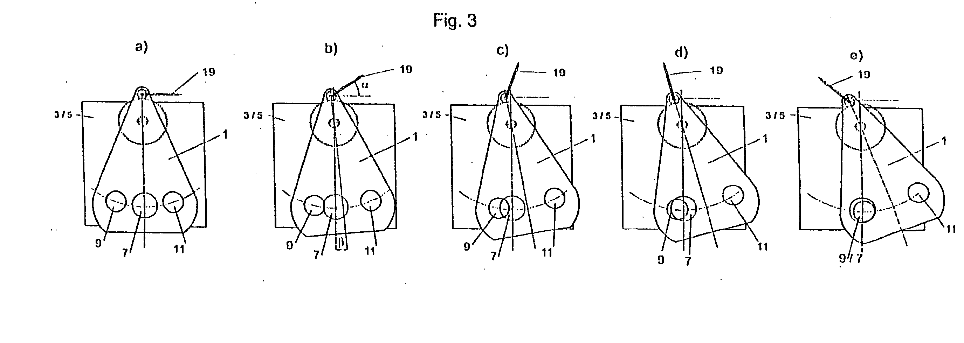

Dieser Vorgang ist schematisch anhand der Fig. 3a bis 3e nachvollziehbar. In Fig. 3a ist die Schwenkplatte 1 in der Ausgangsstellung entsprechend Fig. 1a dargestellt. Durch Drehen des Hebels 19 um den Winkel α wird die Schwenkplatte 1 um den Winkel β nach rechts bewegt. Durch weiteres Bewegen des Hebels 19 erfolgt ein weiteres Schwenken der Schwenkplatte 1, bis schliesslich die Kavität 9, enthaltend das Filtersieb, vollständig im Bereich der Durchgangsbohrung 7 der beiden Gehäuseplatten 3 und 5 zu liegen kommt. Nun ist ein Hindurchfliessen und Filtrieren der Polymerenschmelze möglich.

Durch den Einsatz einer erfindungsgemäss vorgeschlagenen signifikant vergrösserten Übersetzung der manuellen Kraft des Anlagenbedieners wird erreicht, dass für die Bewegung der Schwenkplatte ein deutlich vergrössertes Moment zur Verfügung steht, ohne dass sich die Baugrösse der Siebwechselvorrichtung wesentlich ändert.

Dabei wurde bei der Erfindung insbesondere darauf geachtet, dass es sich um eine einfache, technisch jedem Mechaniker bekannte und damit einfach zu bedienende sowie im Schadensfall leicht zu wartende bzw. austauschbare Kraftübersetzung bestehend aus zwei Zahnrädern handelt.

An sich sind manuell betätigte Siebwechslermodelle, bestehend aus einem Gehäuse, aufweisend zwei parallel angeordnete Gehäuseplatten, in deren Mitte eine bewegliche Platte wie die Schwenkplatte um einen Drehpunkt drehbar gelagert angeordnet ist, durch industriellen Einsatz bekannt. Neu ist, dass die Schwenkplatte, in welcher sich die Bohrungen bzw. Siebaufnahmekavitäten befinden, in denen eine Stützplatte wie Lochplatte und das darauf aufgelegte Siebgewebe eingebracht ist, mittels dem erfindungsgemäss vorgeschlagenen Getriebe um den Drehpunkt A bewegt wird, damit die Kavitäten in den bzw. aus dem Schmelzkanal bewegt werden können. Neu ist, dass an den Gehäuseplatten mindestens ein Zahnrad drehfest fixiert ist, auf welchem mindestens ein in oder an der Schwenkplatte drehbar gelagertes Zahnrad kleineren Durchmessers abrollt. Durch dieses Abrollen wird die Schwenkplatte gemeinsam mit dem antreibenden kleineren Zahnrad um den Drehpunkt A geschwenkt.

Je nach gewählter Übersetzung ist es nicht notwendig, das grosse Zahnrad als separates Teil am Gehäuse anzubringen; dies empfiehlt sich nur bei relativ grossen Übersetzungen, bei denen das kleine Zahnrad ggf. mehr als eine Umdrehung zurücklegt und dazu ggf. mittels einer Kurbel angetrieben wird. Für eine solche Kurbel wird die Achse des kleinen Zahnrades soweit verlängert, dass die Kurbel ausserhalb der Siebwechselvorrichtung frei gedreht werden kann. Alternativ zur Kurbel kann selbstverständlich auch eine sogenannte Ratsche eingesetzt werden.

Bei dem grossen Zahnrad könnte es ausreichend sein, die Verzahnung oder nur einen Teil davon direkt auf den Gehäuseplatten anzubringen.

Insbesondere bei hohen zu erwartenden Losbrechmomenten empfiehlt sich eine symmetrische Anordnung der Verzahnungen links und rechts von der Schwenkplatte für eine gleichmässige Krafteinleitung und Reduzierung der auftretenden Kräfte in den Verzahnungen.

Durch die gewählte Übersetzung zwischen kleinem Zahnrad (beweglich) und grossen Zahnrad (fest am Gehäuse fixiert) wird erreicht, dass das zum Bewegen der Schwenkplatte notwendige Moment gemäss der Übersetzung (Verhältnis der Zähnezahlen) gesteigert wird.

Bei einer gewählten Übersetzung von 1:5 heisst dies beispielsweise unter Bezug auf Fig. 3, dass zum Bewegen der Schwenkplatte um den Winkel β wie beispielsweise 5° eine Drehung des Hebels um Winkel α wie 25° erforderlich ist.

Bei den Siebwechselvorrichtungen ist zu beachten, dass insbesondere das Losbrechmoment sehr hoch sein kann. Ist dieses Losbrechmoment erst einmal überschritten und hat sich die Schwenkplatte bereits ein Stück bewegt, wird in der Regel ein deutlich kleineres Moment zum Schwenken der Schwenkplatte benötigt.

Zur Unterstützung der Krafteinleitung zum Zeitpunkt des Losbrechens können zusätzliche Gewindeelemente (die sonst als Anschläge dienen), benutzt werden, um eine weitere Krafteinleitung zu ermöglichen. Der Einsatz eines Schlagstiftes (Betätigung mittels eines Hammers) für eine bessere Überwindung des Losbrechmomentes ist ebenfalls denkbar.

Ein weiterer wesentlicher Vorteil der von Hand betätigten Siebwechsler mit Kraftverstärkung ist, dass keine Hydraulikzylinder notwendig sind, so dass der Einsatz auch in Bereichen mit besonderen "Lebensmittel-Bestimmungen" wie z.B. der Food-Industrie möglich ist.

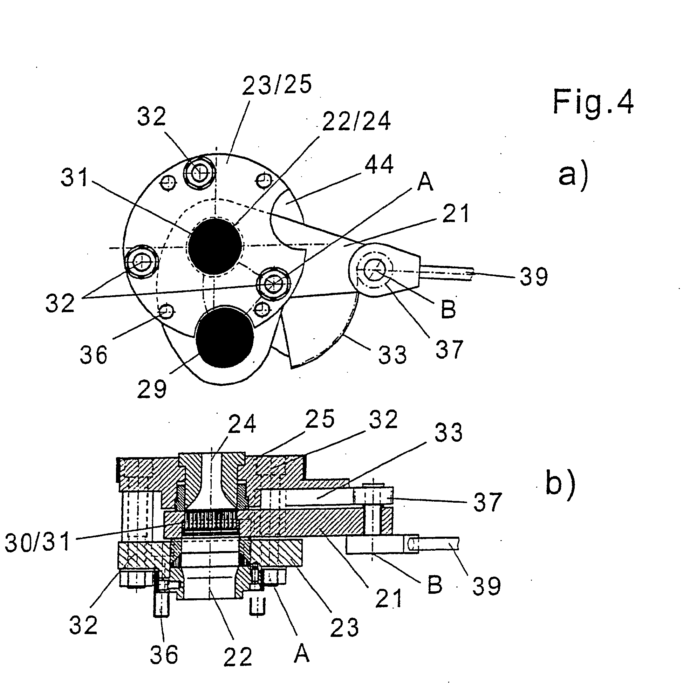

In den Fig. 4a und 4b ist eine weitere praxisbezogene Ausführungsvariante einer erfindungsgemässen Vorrichtung dargestellt.

Zwischen zwei Gehäuseplatten 23 und 25 angeordnet ist eine Schwenkplatte 21, aufweisend die beiden Bohrungen bzw. Siebaufnahmekavitäten 29 und 31, in denen je eine Stützplatte und das darauf aufgelegte Siebgewebe eingebracht sind. In der Darstellung gemäss Fig. 4a ist die Schwenkplatte derart angeordnet, dass die Siebaufnahmekavitäten 31 mit Filtersieb 30 und die Durchgangsbohrungen 22 resp. 24 in den Gehäuseplatten 23 und 25 für den Hindurchtritt der Polymerschmelze in Linie angeordnet sind. Die beiden Gehäuseplatten 23 und 25 werden mittels Schraubbolzen/Muttern 32 positioniert und zusammengehalten.

Die Schwenkplatte 21 ist um den Bolzen bzw. die Achse A drehbar gelagert, wobei die Drehbewegung mittels einem Zahnrad 37 erfolgt, welches um eine Achse B an der mit der Gehäuseplatte 25 fest verbundenen Zahnradkontur 33 bewegt werden kann. Der Antrieb erfolgt mittels einer Kurbel 39.

Falls nun im Betrieb in der zuströmenden Polymerschmelze in der Durchgangsbohrung 22 ein zu hoher Druck gemessen wird, was auf eine zu starke Verschmutzung des Filtersiebes 30 in der Siebaufnahmekavität 31 schliessen lässt, wird das Zahnrad 37 mittels der Kurbel 39 entlang dem fest mit der Gehäuseplatte 25 angeordneten Zahnrad 33 bewegt. Dadurch wird die Siebaufnahmekavität 31 wegbewegt, und neu gelangt so die Siebaufnahmekavität 29 zwischen die Durchgangsbohrungen 22 und 24. Infolge des noch unverschmutzten Filtersiebes in der Siebaufnahmekavität 29 kann die Polymerschmelze relativ ungehindert durch die Siebvorrichtung in die Durchgangsbohrung 24 hindurchgelangen. Andererseits kann anschliessend das Filtersieb 30 in der Siebaufnahmekavität 31 in der Ausnehmung 44 der beiden Gehäuseplatten 23 und 25 gereinigt werden.

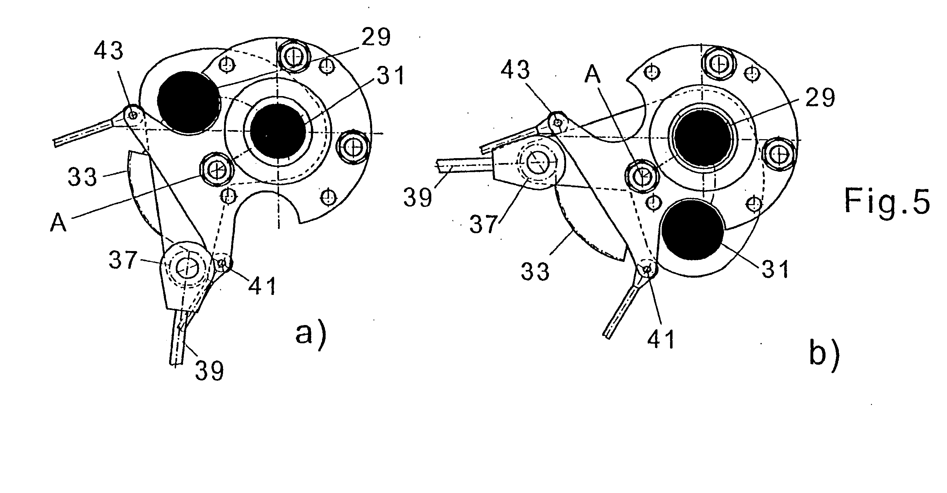

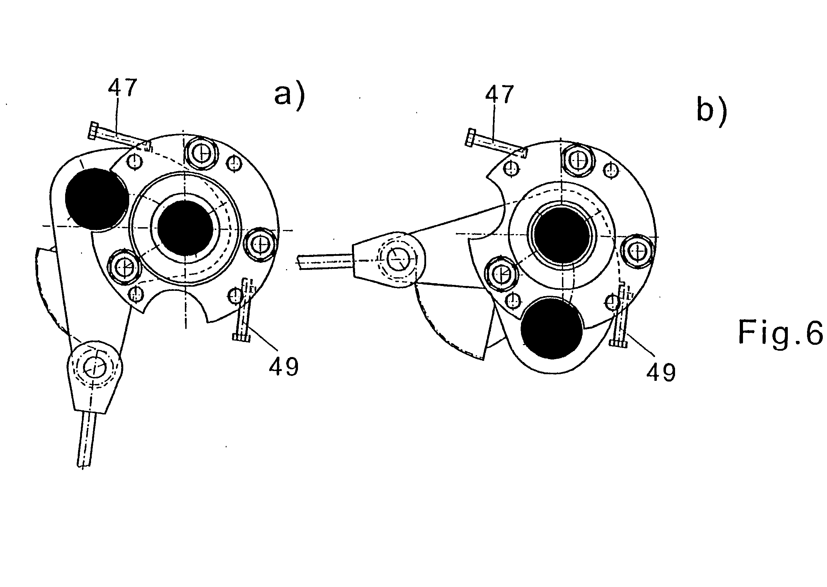

In den Fig. 5 und 6 ist die praxisbezogene Vorrichtung der Fig. 4a und 4b dargestellt, jedoch enthaltend Anschläge, um die Bewegung des Zahnrades 37 entlang dem Zahnrad 33 so zu begrenzen, dass nur eine Schwenkbewegung der Schwenkplatte 21 zwischen den beiden gewünschten Positionen - Siebaufnahmekavität 29 in Linie mit den Durchgangsbohrungen 22 und 24 sowie Siebaufnahmekavität 31 in Linie mit den Durchgangsbohrungen 22 und 24 - erfolgen kann.

In den Fig. 5a und 5b, welche die Vorrichtung Draufsicht in den beiden Extrempositionen zeigt, ist ein Exzenter sowie Anschlag 41 bzw. 43 vorgesehen, welche die Bewegung des Zahnrades 37 selbst begrenzt.

In den Fig. 6a und 6b sind anstelle des Exzenters mit Anschlag beispielsweise ein Losbrechgewinde und Anschlag 47 bzw. 49 vorgesehen. Insbesondere beim Losbrechgewinde und Anschlag besteht der grosse Vorteil, dass die zum Losbrechen zusätzlich notwendige Krafteinleitung durch Betätigen jeweils des einen oder anderen Losbrechgewindes erfolgen kann. Auch ist es möglich, anstelle eines Gewindes zentrisch im Anschlag einen Schlagstift vorzusehen, welcher mittels eines Hammers in Richtung zur Schwenkplatte betätigt werden kann.

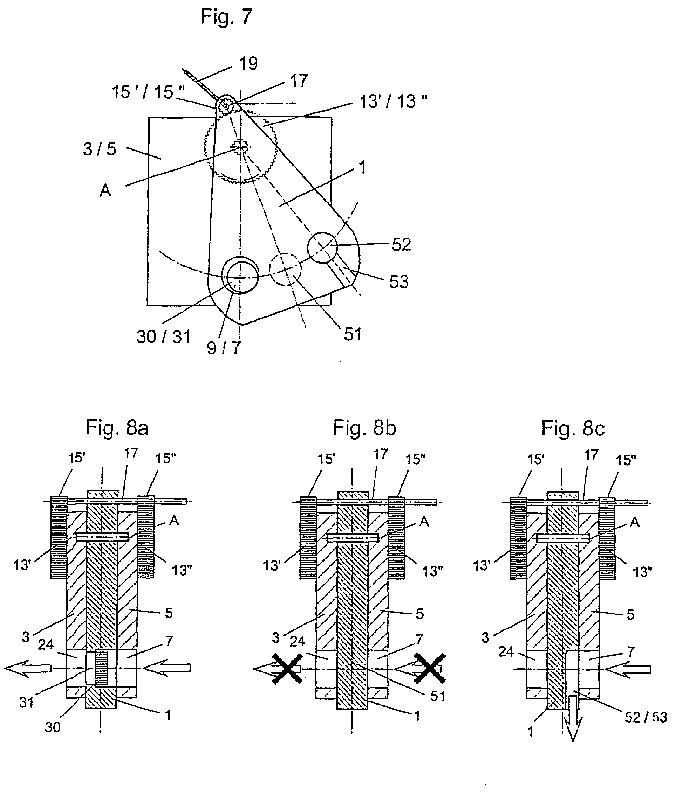

Unter Bezug auf die Fig. 1 bis 6 wurde eine erfindungsgemässe Vorrichtung, ausgebildet als Schwenkplattensiebwechsler detailliert beschrieben. Selbstverständlich ist es möglich, in der erfindungsgemäss angetriebenen Schwenkplatte zusätzlich zu den Filtereinsätzen und/oder anstelle davon weitere bzw. andere Bohrungen und/oder Durchgänge vorzusehen. Mit anderen Worten ist die erfindungsgemäss vorgeschlagene Vorrichtung nebst der Verwendung als Filtriervorrichtung auch als Ablassvorrichtung geeignet, für das Ablassen beispielsweise einer Polymerschmelze aus einem Extruder, Kneter oder dgl.. Unter Bezug auf die nachfolgenden Fig. 7 bis 15 sind weitere mögliche Ausführungsvarianten der erfindungsgemässen Vorrichtung dargestellt.

So zeigt Fig. 7, analog Fig. 1, schematisch in Frontdraufsicht eine erfindungsgemässe Vorrichtung, bei welcher die Schwenkplatte 1 einerseits erneut eine Bohrung 31 aufweist für das Anordnen eines Einsatzsiebes 30, analog wie beispielsweise dargestellt in Fig. 4b. In Abweichung zu Fig. 1 ist eine weitere Bohrung 52 vorgesehen, aufweisend einen radial in der Schwenkplatte 1 nach aussen gerichteten Ablasskanal 53. Bei der Vorrichtung gemäss Fig. 7 ist weiter eine Mittelstellung vorgesehen, gestrichelt andeutungsweise dargestellt und bezeichnet mit dem Bezugszeichen 51. Die drei möglichen Einstellpositionen der Schwenkplatte 1 gemäss Fig. 7 sind schematisch vereinfacht im Querschnitt in den Fig. 8a bis 8c dargestellt.

Fig. 8a zeigt dabei die in Fig. 7 dargestellte Position der Schwenkplatte 1, in welcher Position die Bohrung 31 mit dem Siebeinsatz 30 im Bereich der Bohrungen 7 resp. 24 der Gehäuseplatten 3 und 5 liegt. Mit anderen Worten ist die Position gemäss Fig. 8a geeignet, um die in Pfeilrichtung fliessende Polymerschmelze zu filtrieren.

Soll nun der Durchgang durch die Vorrichtung verschlossen werden, so wird die Schwenkplatte 1 derart um die Achse A geschwenkt, dass der geschlossene Bereich 51, wie dargestellt in Fig. 8b, den Durchgang zwischen den Bohrungen 7 und 24 in den Gehäuseplatten 3 und 5 verschliesst. Somit kann keine Polymerschmelze beispielsweise den Extruder verlassen.

Fig. 8c schliesslich zeigt diejenige Position der Schwenkplatte 1, wenn der Bereich 52 bzw. die Bohrung 52 mit Ablass 53 in den Bereich der Bohrung 7 der Gehäuseplatte 5 zu liegen kommt. Nun verlässt die Polymerschmelze den Extruder nicht in Richtung Bohrung 24 in der Gehäuseplatte 3, da durch die ablenkend ausgebildete Bohrung 52, 53 die Schmelze nach unten abgelassen wird. In dieser Position ist es beispielsweise möglich, beim Reinigen eines Extruders die Restschmelze und Reinigungsmittel nach unten abzulassen, ohne dass diese Materialien, beispielsweise durch ein Sieb und nachfolgende Leitungen oder Werkzeuge geführt werden müssen.

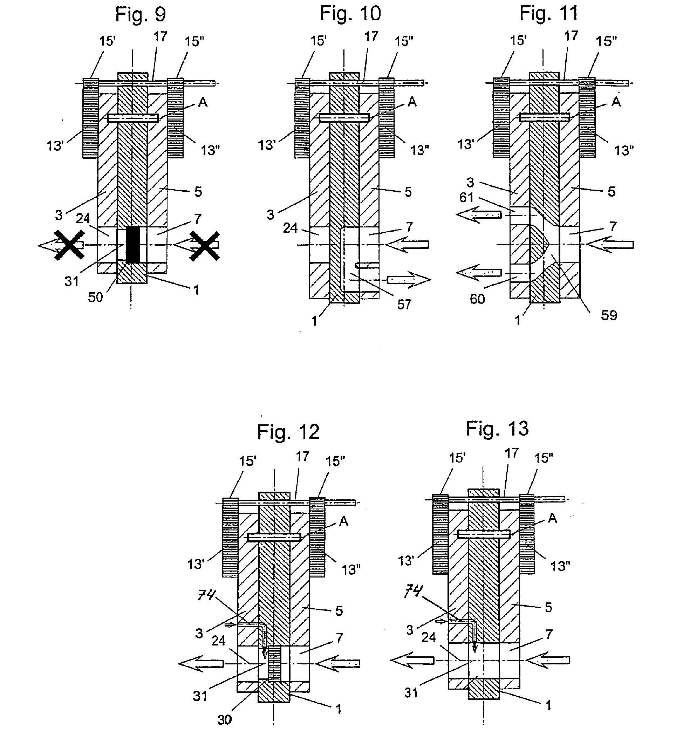

Analog ist es selbstverständlich möglich, weitere Durchgangsbohrungen bzw. Durchgänge durch die Schwenkplatte 1 vorzusehen, sowohl in Ergänzung zu einer Siebkavität 31 wie auch anstelle einer Siebkavität. So ist es beispielsweise möglich, wie in Fig. 9 schematisch vereinfacht dargestellt, eine einfache Durchgangsbohrung 31 vorzusehen, in welcher anstelle eines Siebes 30 ein geschlossener Einsatz 55 angeordnet wird. Auf diese Art und Weise ist es analog zu Fig. 8b möglich, den Durchgang von Bohrung 7 zu Bohrung 24 in den erwähnten Gehäuseplatten 3 und 5 zu verschliessen.

Weiter ist es möglich, wie in Fig. 10 schematisch dargestellt, einen Durchgang 57 in der Schwenkplatte 1 vorzusehen, welcher Durchgang eine Umlenkung der Polymerschmelze ermöglicht. Auf diese Art und Weise ist es möglich die beispielsweise von einem Extruder austretende Polymerschmelze umzulenken und einer weiteren Bearbeitungseinrichtung zuzuführen.

Wiederum gemäss einer weiteren Ausführungsvariante ist es möglich, wie in Fig. 11 schematisch vereinfacht dargestellt, die Durchgangsbohrung in der Schwenkplatte 1 zum Aufteilen des Polymerschmelzstromes zu verwenden. Bei der in Fig. 11 dargestellten Bohrung 59 wird die Polymerschmelze aufgeteilt, so dass sie durch zwei Bohrungen 60 und 61 angeordnet in der Gehäuseplatte 3 zu getrennten weiteren Bearbeitungsprozessen zugeführt werden kann. Selbstverständlich ist es möglich, die Polymerschmelze in zwei, drei, vier oder mehr Einzelströme zu unterteilen. In Ergänzung ist es zudem möglich, in der Bohrung 59 wiederum ein Filtersieb vorzusehen, um die Polymerschmelze vorgängig deren Aufteilung zu filtrieren. Denkbar ist aber auch, dass beispielsweise nur in der Bohrung 60 ein Filtersiebeinsatz vorgesehen ist, während die Polymerschmelze im Durchgang 61 unfiltriert bleibt. Gedacht wird hier insbesondere an Polymerschmelzen mittels welchen transparente Teile herzustellen sind, so dass je nach Verwendungszweck erhöhte Anforderungen an die Reinheit der Polymerschmelze gestellt werden. Wird die Polymerschmelze anschliessend deckend eingefärbt, so ist ein Filtrieren nicht nötig.

In Fig. 12 ist wiederum schematisch im Schnitt vereinfacht eine weitere Ausführungsvariante der erfindungsgemässen Vorrichtung dargestellt, aufweisend eine weitere Bohrung 74, die durch die Gehäuseplatte 3 in den Durchgang 31 verlaufend ausgebildet ist. Diese weitere Bohrung 74 ist einerseits geeignet, um beispielsweise weitere Additive, Zusätze und dgl. der Polymerschmelze im Durchgang 31 zuzuführen, oder aber umgekehrt, um Proben, beispielsweise für Qualitätskontrolle, zu entnehmen. Selbstverständlich ist es möglich, wie in Fig. 12 dargestellt, zusätzlich ein Filtersieb 30 anzuordnen, wobei die zusätzliche Bohrung 74 vorgeschaltet oder nachgeschaltet zu dem Filtersieb 30 ausgebildet sein kann. Fig. 13 zeigt den Durchgang 31 ohne Filtersieb.

In Fig. 14 wiederum ist schematisch im Schnitt, von der Seite gesehen und von oben gesehen, ein Durchgang 31 in der Schwenkplatte 1 dargestellt, aufweisend einen zusätzlichen Ablasskanal 76, für das Ablassen der Polymerschmelze. In der Darstellung gemäss Fig. 14 ist im Durchgang 31 ein den Durchgang 31 verschliessender Siebeinsatz 30' angeordnet, welcher derart ausgebildet ist, dass die Polymerschmelze durch den Ablasskanal 76 abgelassen werden kann.

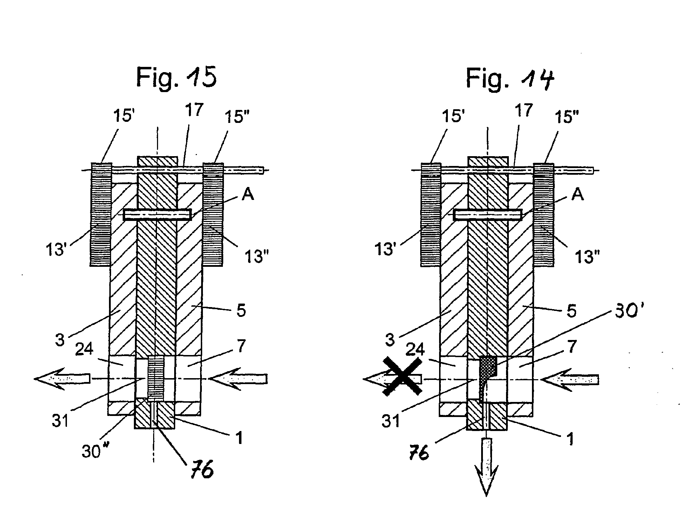

Da vorzugsweise der Filtereinsatz 30' auswechselbar ist, ist es auch möglich, wie in Fig. 15 analog dargestellt, einen den Ablasskanal 76 verschliessenden Siebeinsatz 30" anzuordnen. In der Darstellung gemäss Fig. 15 tritt die Polymerschmelze durch die Bohrung bzw. den Durchgang 31 und den Siebeinsatz 30" hindurch, um weiteren Bearbeitungseinrichtungen zugeführt zu werden.

Bei den Darstellungen in den Fig. 1 bis 15 handelt es sich selbstverständlich nur um Beispiele, welche in x-beliebiger Art und Weise abgeändert, ergänzt oder modifiziert werden können. So ist es selbstverständlich möglich, nur eine Gehäuseplatte vorzusehen. Anstelle je der beiden Zahnradgetriebe in Fig. 1 kann nur ein einziges Zahnradgetriebe verwendet werden. Anstelle der jeweils dargestellten zwei Siebaufnahmekavitäten bzw. Durchgängen können nur eine oder drei oder mehr derartiger Siebaufnahmekavitäten bzw. Durchgänge vorgesehen werden, usw. Schliesslich kann anstelle eines Zahnradgetriebes auch ein Schneckengetriebe verwendet werden. Auch das Übersetzungsverhältnis kann selbstverständlich beliebig gewählt werden; wichtig ist, dass die notwendige Kraft für den Antrieb erzeugt werden kann, damit insbesondere ein Losbrechen der Schwenkplatte beispielsweise beim Wechseln der Filtersiebe bzw. das notwendige Losbrechmoment erzielt werden kann.

## Patentansprüche

1. Manuell betätigbare Vorrichtung zum Filtrieren und/oder Ablassen von viskosen und hochviskosen Polymerschmelzen, aufweisend mindestens ein plattenartiges Element (1, 21) mit mindestens einem Durchgang und/oder einer Bohrung (9, 11, 29, 31, 52, 57, 59), welches Element um einen Drehpunkt (A) gelagert schwenkbar ist, derart, um die Durchführung bzw. die Bohrung in den oder aus dem Schmelzestrom, zu führen, **dadurch gekennzeichnet, dass** das plattenartige Element bzw. die Schwenkplatte (1, 21) zwischen zwei Gehäuseplatten (3, 5, 23, 25) hin und her schwenkbar angeordnet ist und dass das plattenartige Element bzw. die Schwenkplatte über ein Getriebe (13', 13", 15', 15"; 33, 37) zur Übersetzung der manuellen Kraft mit einem Antrieb verbunden ist, wobei das Getriebe aus mindestens einem Zahnradpaar besteht und wobei als Antrieb mechanische Antriebsmittel vorgesehen sind, wie ein Hebel, eine Ratsche oder eine Kurbel zum Bewegen der Schwenkplatte (1, 21) um den Drehpunkt (A).

2. Vorrichtung nach Anspruch 1, **dadurch gekennzeichnet, dass** das schwenkbare Element (1, 21) resp. die Schwenkplatte vorzugsweise senkrecht zum Schmelzstrom schwenkbar angeordnet ist.

3. Vorrichtung nach einem der Ansprüche 1 bis 2, **dadurch gekennzeichnet, dass** das Getriebe ein Übersetzungsverhältnis aufweist.

4. Vorrichtung nach einem der Ansprüche 1 bis 3, **dadurch gekennzeichnet, dass** das eine Zahnrad (13', 13", 33) des Zahnradpaares fest wie insbesondere drehfest mit mindestens einer der Gehäuseplatten verbunden ist.

5. Vorrichtung nach einem der Ansprüche 2 bis 4, **dadurch gekennzeichnet, dass** die Achse des einen Zahnrades mit der Drehachse (A) der Schwenkplatte (1, 21) übereinstimmt.

6. Vorrichtung nach einem der Ansprüche 2 bis 5, **dadurch gekennzeichnet, dass** das eine Zahnrad (13', 13", 33), an welchem der Antrieb angreift, Teil mindestens einer der Gehäuseplatten ist.

7. Vorrichtung nach einem der Ansprüche 2 bis 6, **dadurch gekennzeichnet, dass** die Achse (B) des anderen Zahnrades (15', 15", 37) in der Schwenkplatte (1, 21) gelagert ist.

8. Vorrichtung nach einem der Ansprüche 2 bis 7, **dadurch gekennzeichnet, dass** die Achse (B) des anderen Zahnrades eine Drehbewegung um den Drehpunkt (A) des einen Zahnrades beschreibt.

9. Vorrichtung nach einem der Ansprüche 2 bis 8, **dadurch gekennzeichnet, dass** das andere Zahnrad auf dem einen Zahnrad abrollend angeordnet ist.

10. Vorrichtung nach einem der Ansprüche 1 bis 9, **dadurch gekennzeichnet, dass** die Schwenkplatte mindestens eine, vorzugsweise zwei oder mehr Siebaufnahmekavitäten (9, 11, 29, 31) aufweist.

11. Vorrichtung nach einem der Ansprüche 1 bis 10, **dadurch gekennzeichnet, dass** die Schwenkplatte (1, 21) in einer Schwenkposition festlegbar ist, in welcher der Medienstrom, wie der Schmelzstrom, unterbrochen ist.

12. Vorrichtung nach einem der Ansprüche 1 bis 11, **dadurch gekennzeichnet, dass** in der Schwenkplatte (1, 21) eine gebogene, gekrümmte oder abgewinkelte Durchführung angeordnet ist, derart, dass der Schmelzstrom in der Schwenkplatte in Richtung parallel zur Schwenkplatte umgelenkt wird, und beispielsweise seitlich aus der Platte ablassbar ist.

13. Vorrichtung nach einem der Ansprüche 1 bis 12, **dadurch gekennzeichnet, dass** in der Schwenkplatte mindestens eine Durchführung vorgesehen ist, welche derart gebogen bzw. gewinkelt ausgebildet ist, um eine ca. 180° Umlenkung des Schmelzstromes in der Platte zu erzeugen, derart, dass der Schmelzstrom vorzugsweise weitgehendst parallel zur Zuführung in entgegengesetzter Richtung aus der Platte abführbar ist.

14. Vorrichtung nach einem der Ansprüche 1 bis 13, **dadurch gekennzeichnet, dass** in der Platte mindestens eine Bohrung bzw. Durchführung vorgesehen ist, aufweisend eine Zweifach- oder Mehrfachauftrennung, um den Schmelzstrom in der Platte aufzuteilen in zwei, drei oder mehrere Schmelzströme.

15. Vorrichtung nach einem der Ansprüche 1 bis 14, **dadurch gekennzeichnet, dass** in der Platte mindestens eine weitere Bohrung (74) vorgesehen ist, über welche die Durchführung, Bohrung oder Siebkavität nach ausserhalb kommuniziert, derart, dass durch diese weitere Bohrung Additive, Zusätze und dgl. in den Bereich der Durchführung, Bohrung oder Siebkavität zuführbar sind, oder umgekehrt aus der Durchführung, Bohrung bzw. Siebkavität Proben entnehmbar sind.

16. Vorrichtung nach einem der Ansprüche 1 bis 15, **dadurch gekennzeichnet, dass** in der Schwenkplatte (1) mindestens eine Bohrung bzw. ein Durchgang (31) vorgesehen ist, aufweisend einen weitgehendst innerhalb der Platte (1) und parallel zur Platte verlaufenden, nach ausserhalb der Platte kommunizierenden weiteren Durchgang (76), beispielsweise geeignet für das Ablassen der Schmelze, und dass weiter im Durchgang bzw. der Bohrung (31) auswechselbare Siebanordnungen (30', 30") platzierbar sind, derart, dass je nach verwendeter Siebanordnung (30', 30") der weitere Durchgang (76) verschliessbar ist.

17. Vorrichtung nach einem der Ansprüche 1 bis 16, **dadurch gekennzeichnet, dass** Anschlagmittel (41, 43, 45, 47) vorgesehen sind für die Begrenzung der Bewegung der Schwenkplatte (1, 21).

18. Vorrichtung nach einem der Ansprüche 2 bis 17, **dadurch gekennzeichnet, dass** es sich beim anderen Zahnrad um eine Schneckenwelle handelt, welche durch schneckenartige Drehbewegung entlang dem einen Zahnrad für die Drehbewegung der Schwenkplatte bewegt wird.

19. Vorrichtung nach einem der Ansprüche 1 bis 18, **dadurch gekennzeichnet, dass** Mittel zur Erhöhung des Losbrechmomentes vorgesehen sind wie insbesondere Getriebemittel wie z.B. ein Schneckengetriebe; Mittel zur Erzeugung eines zusätzlichen Momentes, gegebenenfalls angeordnet in Anschlagmitteln zur Begrenzung der Bewegung der Schwenkplatte etc.

20. Verfahren unter Verwendung einer Vorrichtung nach einer der Ansprüche 1 bis 19 zum Auswechseln und/oder wieder Entfernen mindestens eines siebartigen Organs zum Filtrieren von viskosen und hochviskosen Polymerschmelzen und/oder zum Bewegen eines Durchganges oder einer Bohrung zum Ablassen von viskosen und hochviskosen Polymerschmelzen, wobei das Organ, der Durchgang oder die Bohrung in einer um einen Drehpunkt gelagerten schwenkbaren Platte angeordnet ist, um das Organ bzw. den Durchgang oder die Bohrung in den oder aus dem Schmelzstrom zu führen, **dadurch gekennzeichnet, dass** die Schwenkplatte durch Schwenkbewegung mittels eines Getriebes, wie insbesondere eines Zahnradgetriebes, bewegt wird.

21. Verfahren nach Anspruch 20, **dadurch gekennzeichnet, dass** durch Bewegen des anderen Zahnrades des Getriebes um das eine Zahnrad die Schwenkplatte in Bezug zu mindestens einer Gehäuseplatte bewegt wird.

22. Verwendung der Vorrichtung nach einem der Ansprüche 1 bis 19 zum Auswechseln und/oder wieder Entfernen eines siebartigen Organs zum Filtrieren von viskosen und hochviskosen Polymerschmelzen, und/oder zum Bewegen einer Bohrung oder eines Durchganges vorgesehen für das Ablassen von viskosen und hochviskosen Polymerschmelzen, wobei das Organ, die Bohrung oder der Durchgang in einer um einen Drehpunkt gelagerten Schwenkplatte angeordnet sind, um das Organ, die Bohrung oder den Durchgang in den oder aus dem Schmelzestrom zu führen.

23. Verwendung nach Anspruch 22 zum Filtrieren und/oder Ablassen einer Polymerschmelze aus einem Extruder oder Kneter.

## Claims

1. Manually operatable device for filtering and/or discharging of viscous and high-viscous polymer melts, comprising at least one plate-like element (1, 21) with at least one passage and/or a borehole (9, 11, 29, 31, 52, 57, 59) which element is pivotably mounted around a pivot point (A) such to drive the passage or the borehole respectively into or out of the melt stream, **characterized in that** the plate-like element or the swivel plate (1, 21) respectively is back and forth pivotably arranged between two housing plates (3, 5, 23, 25) and that the plate-like element or the swivel plate respectively is connected with a drive mechanism via a transmission (13', 13", 15, 15"; 33, 37) for transforming the manual force, the transmission consists out of at least one pair of gear wheels and as drive mechanism a mechanical driving means is provided such as a lever, a ratchet or a crank handle for moving the swivel plate (1, 21) around the pivot point (A).

2. Device according to claim 1, **characterized in that** the pivotable element (1, 21) or the swivel plate respectively is arranged preferably perpendicularly pivotable in relation to the melt stream.

3. Device according to one of the claims 1 or 2, **characterized in that** the transmission possesses a gear transmission ratio.

4. Device according to one of the claims 1 to 3, **characterized in that** one gear wheel (13', 13", 33) of the pair of gear wheels is connected firmly such as in particular torque proof with at least one of the housing plates.

5. Device according to one of the claims 2 to 4, **characterized in that** the axis of the one gear wheel corresponds with the pivot axis (A) of the swivel plate (1, 21).

6. Device according to one of the claims 2 to 5, **characterized in that** the one gear wheel (13', 13", 33) on which the drive mechanism engages is part of at least one of the housing plates.

7. Device according to one of the claims 2 to 6, **characterized in that** the axis (B) of the other gear wheel (15', 15", 37) is arranged in the swivel plate (1, 21).

8. Device according to one of the claims 2 to 7, **characterized in that** the axis (B) of the other gear wheel describes a rotation around the pivot point (A) of the one gear wheel.

9. Device according to one of the claims 2 to 8, **characterized in that** the other gear wheel is arranged rolling up on the one gear wheel.

10. Device according to one of the claims 1 to 9, **characterized in that** the swivel plate has at least one, preferably two or more sieve collecting cavities (9, 11, 29, 31).

11. Device according to one of the claims 1 to 10, **characterized in that** the swivel plate (1, 21) can be fixed in a pivot position, in which the medium stream, such as the melt stream, is interrupted.

12. Device according to one of the claims 1 to 11, **characterized in that** within the swivel plate (1, 21) an arcuated, curved or angled passage is arranged such that the melt stream is deflected within the swivel plate in direction parallel to the swivel plate and can be discharged e.g. laterally out of the plate.

13. Device according to one of the claims 1 to 12, **characterized in that** within the swivel plate at least one passage is arranged which is formed arcuated or angled respectively such to create an approx. 180° deflection of the melting stream within the plate such that the melting stream preferably is dischargable parallel to the feeding in opposite direction out of the plate.

14. Device according to one of the claims 1 to 13, **characterized in that** within the plate at least one borehole or passage respectively is arranged showing a double or multiple separation to separate the melting stream within the plate in two, three or more melt streams.

15. Device according to one of the claims 1 to 14, **characterized in that** within the plate at least one further borehole (74) is arranged by means of which the passage, the borehole or the sieve cavity communicates to the outside area, so that through this further borehole additives, supplements and the like can be added into the area of the passage, the borehole or the sieve cavity or vice versa probes can be removed out of the passage, borehole or sieve cavity.

16. Device according to one of the claims 1 to 15, **characterized in that** within the swivel plate (1) at least one borehole or a passage (31) respectively is arranged comprising an at least within the plate (1) and parallel to the plate running further passage (76), communicating to the outside of the plate, e.g. suitable for discharging of the melt, and **in that** within the passage or borehole (31) respectively exchangeable sieve arrangements (30', 30") are placeable such, that dependent on the used sieve arrangement (301, 30") the further passage (76) can be closed.

17. Device according to one of the claims 1 to 16, **characterized in that** stop means (41, 43, 45, 47) are provided for limiting the movement of the swivel plate (1, 21).

18. Device according to one of the claims 2 to 17, **characterized in that** the other gear wheel is a spiral shaft, which by means of a spiral-like rotation is moved along the one gear wheel for the rotation of the swivel plate.

19. Device according to one of the claims 1 to 18, **characterized in that** means for increasing the breakaway torque are provided as in particular transmission means as e.g. a spiral transmission, means for creating an additional torque, if necessary arranged within stop means for limiting the movement of the swivel plate, etc.

20. Process for exchanging and/or again removing of at least one sieve-like.element for filtering of viscous and high-viscous polymer melts and/or for moving a passage or a borehole for the discharge of viscous and high-viscous polymer melts by using a device according to one of the claims 1 to 19, the element, the passage or the borehole is arranged within a plate which is pivotably mounted around a pivot point to drive the element or the passage or the borehole respectively into or out of the melt stream, **characterized in that** the swivel plate is moved by pivoting by means of a transmission such as in particular a gear wheel transmission.

21. Process according to claim 20, **characterized in that** by moving the other gearwheel of the transmission around the one gear wheel the swivel plate is moved in relation to at least one housing plate.

22. Use of the device according to one of the claims 1 to 19 for exchanging and/or again removing of a sieve-like element for filtering of viscous and high-viscous polymer melts and/or for moving a borehole or a passage, provided for the discharge of viscous and high-viscous polymer melts, the element, the borehole or the passage are arranged within a swivel plate mounted pivotably around a pivot point, to move the element, the borehole or the passage into or out of the melt stream.

23. Use according to claim 22 for filtering and/or discharging of a polymer melt out of an extruder or kneader.

## Revendications

1. Dispositif à commande manuelle pour le filtrage et/ou l'évacuation de fontes de polymères visqueuses et très visqueuses, comprenant au moins un élément en forme de plaque (1, 21) ayant au moins un passage et/ou un alésage (9, 11, 29, 31, 52, 57, 59), cet élément étant monté pivotable autour d'un point de pivotement (A) de telle manière à ce que ledit passage respectivement ledit alésage puisse être amené dans respectivement en dehors du courant de la fonte, **caractérisé en ce que** l'élément en forme de plaque resp. la plaque pivotable (1, 21) est disposé pivotable dans les deux sens entre deux plaques d'un boîtier (3, 5, 23, 25) et **en ce que** l'élément en forme de plaque resp. la plaque pivotable est relié par l'intermédiaire d'un jeu d'engrenages (13', 13", 15', 15" ; 33, 37) à un moyen d'entraînement pour le transfert de la force manuelle, ledit jeu d'engrenages comprenant au moins une paire de roues dentées et ledit moyen d'entraînement comprenant des moyens d'entraînement mécaniques, comme un levier, un cliquet ou une manivelle pour déplacer la plaque pivotable (1, 21) autour du point de pivotement (A).

2. Dispositif selon la revendication 1, **caractérisé en ce que** l'élément pivotable (1, 21) resp. la plaque pivotable est de préférence arrangé de manière pivotable perpendiculairement au courant de la fonte.

3. Dispositif selon l'une des revendications 1 à 2, **caractérisé en ce que** le jeu d'engrenages comprend un rapport de multiplication.

4. Dispositif selon l'une des revendications 1 à 3, **caractérisé en ce que** l'une des roues dentées (13', 13", 33) de ladite paire de roues dentées est reliée de manière fixe, notamment fixe contre rotation, aven au moins une desdites plaques de boîtier.

5. Dispositif selon l'une des revendications 2 à 4, **caractérisé en ce que** l'axe de l'une des roues dentées correspond avec l'axe de rotation (A) de la plaque pivotable (1, 21).

6. Dispositif selon l'une des revendications 2 à 5, **caractérisé en ce que** l'une des roues dentées (13', 13" , 33), sur laquelle s'engage le moyen d'entraînement, forme partie d'au moins une des plaques de boîtier.

7. Dispositif selon l'une des revendications 2 à 6, **caractérisé en ce que** l'axe (B) de l'autre roue dentée (15', 15", 37) est logé dans la plaque pivotable (1, 21).

8. Dispositif selon l'une des revendications 2 à 7, **caractérisé en ce que** l'axe (B) de l'autre roue dentée décrit un mouvement de rotation autour du point de pivotement (A) de ladite une roue dentée.

9. Dispositif selon l'une des revendications 2 à 8, **caractérisé en ce que** ladite autre roue dentée est montée de manière à rouler sur ladite une roue dentée.

10. Dispositif selon l'une des revendications 1 à 9, **caractérisé en ce que** la plaque pivotable comprend au moins une, de préférence deux ou plusieurs cavités de réception de filtres (9, 11, 29, 31).

11. Dispositif selon l'une des revendications 1 à 10, **caractérisé en ce que** la plaque pivotable (1, 21) peut être bloquée dans une position de pivotement dans laquelle le courant de milieu, comme le courant de fonte, est interrompu.

12. Dispositif selon l'une des revendications 1 à 11, **caractérisé en ce qu'**un passage en forme d'arc, courbe ou condé est prévu dans la plaque pivotable (1, 21) de telle manière que le courant de fonte est dévié dans la plaque pivotable dans une direction parallèle à la plaque pivotable pour pouvoir être déchargé latéralement en dehors de la plaque.

13. Dispositif selon l'une des revendications 1 à 12, **caractérisé en ce qu'**au moins un passage est prévu dans la plaque pivotable, passage aménagé courbé ou condé de telle manière à créer une déviation d'environ 180° dans la plaque pour que le courant de fonte puisse être déchargé de la plaque de préférence en grande partie parallèlement mais en sens contraire de l'alimentation.

14. Dispositif selon l'une des revendications 1 à 13, **caractérisé en ce qu'**au moins un alésage resp. passage est prévue dans la plaque et comprenant une séparation double ou multiple pour subdiviser le courant de fonte dans la plaque en deux, trois ou plus de courants de fonte.

15. Dispositif selon l'une des revendications 1 à 14, **caractérisé en ce qu'**au moins un alésage supplémentaire est prévu dans la plaque, à travers lequel le passage, l'alésage ou la cavité de filtres communique avec l'extérieur, de manière à permettre l'introduction à travers cet alésage supplémentaire d'additifs ou de suppléments dans la zone du passage, de l'alésage ou de la cavité de filtre ou inversement à permettre l'extraction d'échantillons par le passage, l'alésage ou la cavité de filtres.

16. Dispositif selon l'une des revendications 1 à 15, **caractérisé en ce qu'**au moins un alésage resp. un passage (31) est prévu dans la plaque pivotable (1) comprenant un passage supplémentaire (76) passant pour la plus grande partie à l'intérieur et parallèlement à la plaque (1) et communiquant avec l'extérieur, utilisable par exemple pour décharger la fonte et **en ce qu'**en outre des filtres (30', 30") échangeables peuvent être placés dans le passage resp. l'alésage (31), de manière à ce que dépendant du filtre (30', 30") utilisé ledit passage supplémentaire (76) puisse être fermé.

17. Dispositif selon l'une des revendications 1 à 16, **caractérisé par** des moyen de butée (41, 43, 45, 47) pour limiter le mouvement de la plaque pivotable (1, 21).

18. Dispositif selon l'une des revendications 2 à 17, **caractérisé en ce que** ladite autre roue dentée est un arbre à vis sans fin qui par un mouvement en spirale le long d'une des roues dentées provoque la rotation de la plaque pivotable.

19. Dispositif selon l'une des revendications 1 à 18, **caractérisé par**: des moyens pour augmenter le couple initial de décollement, comme un jeu d'engrenages, par exemple un engrenage à vis sans fin; des moyens pour créer un couple supplémentaire, en l'occurrence montés dans des moyens de butée pour limiter le mouvement de la plaque pivotable etc.

20. Procédé, tout en utilisant un dispositif selon l'une des revendications 1 à 19, pour échanger et/ou enlever au moins un élément filtre destiné au filtrage de fontes de polymères visqueuses et très visqueuses et/ou pour mettre en mouvement un passage ou un alésage pour l'évacuation de fontes de polymères visqueuses ou très visqueuses, ledit élément, le passage ou l'alésage étant prévus dans une plaque pivotable supportée dans un point de pivotement, pour placer ledit élément resp. le passage ou l'alésage dans ou hors du courant de fonte, **caractérisé en ce que** la plaque pivotable est déplacée par un mouvement de pivotement au moyens d'un jeu d'engrenages, comme notamment un jeu de roues dentées.

21. Procédé selon la revendication 20, **caractérisé en ce qu** le mouvement de l'autre roue dentée du jeu d'engrenages autour de ladite une roue dentée provoque le mouvement de la plaque pivotable par rapport à au moins une plaque de boîtier.

22. Utilisation du dispositif selon l'une des revendications 1 à 19 pour échanger et/ou enlever d'un élément filtre destiné au filtrage de fontes de polymères visqueuses et très visqueuses et/ou pour mettre en mouvement un alésage ou un passage pour l'évacuation de fontes de polymères visqueuses et très visqueuses, ledit élément, l'alésage ou le passage étant prévus dans une plaque pivotable supportée dans un point de pivotement, pour placer ledit élément, l'alésage ou le passage dans ou hors du courant de fonte.

23. Utilisation selon la revendication 22 pour le filtrage et/ou l'évacuation d'une fonte de polymères d'une installation d'extrusion ou de malaxeur.
